Europäisches Patentamt

European Patent Office

Office européen des brevets

(19)

(11) **EP 0 527 341 B1**

## (12) FASCICULE DE BREVET EUROPEEN

(45) Date de publication et mention
de la délivrance du brevet:
**02.09.1998 Bulletin 1998/36**

(51) Int Cl.⁶: **H04B 7/26**, H04Q 7/22

(21) Numéro de dépôt: **92111891.5**

(22) Date de dépôt: **13.07.1992**

(54) **Séquencement du traitement du signal dans le mode communication d'un système de radiotéléphone cellulaire numérique**

Sequenzsteuerung zur Signalverarbeitung im Gesprächsmodus für ein digitales, zellulares Funktelefonsystem

Sequencing of signal processing in communication mode for a digital cellular radiotelephone system

(84) Etats contractants désignés:
**AT BE CH DE DK ES FR GB GR IT LI LU MC NL PT SE**

(30) Priorité: **18.07.1991 FR 9109088**

(43) Date de publication de la demande:
**17.02.1993 Bulletin 1993/07**

(73) Titulaire: **ALCATEL ALSTHOM COMPAGNIE GENERALE D'ELECTRICITE**
**75008 Paris (FR)**

(72) Inventeurs:
- **Dartois, Luc**
  **F-78955 Carrieres sous Poissy (FR)**
- **Rousseau, Emmanuel**
  **F-75008 Paris (FR)**

(74) Mandataire: **El Manouni, Josiane et al**
**COMPAGNIE FINANCIERE ALCATEL**
**Dépt. Propr. Industrielle,**
**30, avenue Kléber**
**75116 Paris (FR)**

(56) Documents cités:
- **IEEE INTERNATIONAL SYMPOSIUM ON CIRCUITS AND SYSTEMS vol. 2, 7 Juin 1988, ESPOO (FI) pages 1803 - 1810,E. KUISMA ET AL 'Signal Processing Requirements in Pan-European Digital Mobile Communications'**
- **FUNKSCHAU vol. 62, no. 12, Juin 1990, M NCHEN (DE) pages 64 - 68 F. LEYRER 'Mega-Chips fürs Taschentelefon'**
- **PROCEEDINGS VLSI AND COMPUTER PERIPHERALS 8 Mai 1989, HAMBURG (DE) pages 417 - 422;P. VARY:'IMPLEMENTATION ASPECTS OF THE PAN-EUROPEAN DIGITAL MOBILE RADIO SYSTEM'**
- **IEEE GLOBAL TELECOMMUNICATIONS CONFERENCE & Exhibition, vol. 2, 27 Novembre 1989, DALLAS (US), pages 1060 - 1064; J. NATVIG et al.: 'Speech processing in the Pan-European Digital Mobile Radio System'**

## Description

La présente invention concerne le séquencement du traitement numérique du signal effectué pendant le mode communication dans un système de radiotéléphone cellulaire numérique faisant appel à l'accès multiple à répartition dans le temps, notamment dans le système européen.

Le traitement numérique du signal sera maintenant explicité en liaison avec un terminal afin de clarifier l'exposé, bien qu'il ne faille pas voir ici une limitation. Ce terminal échange des informations au moyen de signaux radio avec une station de base qui est un point d'accès au réseau de communication câblé. Il comprend donc un circuit radio qui, à la réception, transforme chacun de ces signaux radio en un signal numérique en bande de base et qui, à l'émission, effectue l'opération inverse. Il comprend également un circuit de traitement du signal qui, à la réception, effectue différentes opérations sur le signal de réception en bande de base pour produire un signal numérique de parole à destination d'un circuit de conversion et qui, à l'émission, effectue les opérations inverses. Ce circuit de conversion effectue les conversions numérique-analogique et analogique-numérique pour assurer l'interface entre le micro et le haut-parleur du terminal d'une part, et le circuit de traitement du signal d'autre part. Le terminal comprend de plus un circuit de commande qui dirige le fonctionnement du terminal, notamment en commandant le circuit radio et le circuit de traitement du signal. Le traitement numérique du signal désignera maintenant, par convention, l'ensemble des opérations réalisées par le circuit de traitement du signal.

Le mode communication s'entend comme le mode de fonctionnement durant lequel une communication de parole est établie.

Il est donc admis ici que les procédures qui permettent d'initialiser cette communication ont déjà été accomplies car elles ne font pas l'objet de la présente invention.

Les systèmes de radiotéléphonie concernés sont les systèmes dits à accès multiple à répartition dans le temps. Ces systèmes font appel à des trames répétitives subdivisées en intervalle de temps. Une communication entre une station de base et un terminal prend place sur deux intervalles de temps distincts, l'un pour un sens de transmission, l'autre pour l'autre sens, ces intervalles de temps occupant toujours la même position au sein de chaque trame.

Un système particulier fonctionne selon cette méthode, il s'agit du système de radiotéléphone cellulaire numérique européen défini par le Groupe Spécial Mobile (GSM) de l'Institut Européen de normalisation des télécommunications connu sous le terme anglais "European Telecommunications Standards Institut" (ETSI).

L'invention sera présentée en rapport avec ce système particulier, ce qui permet de se référer à un support connu, notamment les recommandations publiées par le GSM.

Il s'ensuit que :

- le signal numérique en bande de base est un signal numérique modulé selon la modulation dite GMSK, abreviation de l'expression anglaise "Gaussian Minimum Shift Keying" à la fréquence de 270,3 Kbits/sec,
- le signal numérique de parole se présente sous la forme d'échantillon de 13 bits à la fréquence de 8 kHz,
- les échanges avec le circuit de commande portent essentiellement sur les commandes de processus, la signalisation et les informations de synchronisation.

Par ailleurs le système GSM fait appel à deux structures temporelles qui se superposent, des multitrames comprenant soit 26 trames soit 51 trames que l'on conviendra d'appeler multitrame à 26 et multitrame à 51. Cette dernière est utilisée dans la procédure d'initialisation des communications, tandis que la multitrame à 26 est utilisée pour acheminer les communications proprement dites.

Dans le mode communication, le terminal est donc sur la multitrame à 26, l'ensemble des opérations permettant d'initialiser la communication et décrivant le passage de la multitrame à 51 sur la multitrame à 26 état exposé dans les recommandations des séries 04 et 05 du GSM. Les différentes fonctions à réaliser durant ce mode peuvent se décomposer en fonctions d'émission et fonctions de réception :

- fonctions d'émission :

    + traitement de la parole à l'émission : production par codage d'un bloc de parole de 260 bits à partir de 160 échantillons de parole de 13 bits (recommandations 06.10, 06.12, 06.31 et 06.32 du GSM), ce qui correspond à une communication plein débit dans la terminologie du GSM.
    + codage de canal : production d'un bloc codé de 456 bits à partir d'un bloc de parole (recommandation 05.03 du GSM).
    + entrelacement : formation d'un bloc entrelacé de 464 bits à partir de sous-blocs de deux blocs codés (recommandation GSM 05.03 du GSM).
    + chiffrement : obtention de paquets de 116 bits à partir des blocs entrelacés précédents, ces paquets comprenant chacun deux sous-blocs, (recommandation 03.20 du GSM).
    + traitement des paquets : production d'un palier au format d'un intervalle de temps à partir d'un paquet et de bits de contrôle (recommandations 05.01 et 05.02 du GSM).
    + modulation GMSK : modulation numérique des bits formant les paliers (recommandation 05.04 du GSM).

- fonctions de réception;

  + démodulation GMSK : fonction correspondant à la modulation et restitution des paquets,
  + déchiffrement
  + désentrelacement
  + décodage de canal
  + traitement de la parole à la réception : restitution de 160 échantillons de 13 bits à 8kHz à partir d'un bloc de parole de 260 bits.

La solution couramment adoptée consiste à réaliser ces différentes fonctions en parallèle, selon un séquencement dit multitâche, c'est-à-dire en utilisant des organes spécifiques pour chaque fonction ou pour des groupes de fonctions, ces organes étant alors susceptibles de travailler simultanément. Ces fonctions sont en effet clairement délimitées et apparaissent comme telles dans les recommandations du GSM. Cette solution est de plus justifiée par la complexité des fonctions qui engage naturellement à les considérer de manière unitaire et ainsi à les disjoindre quant à leurs moyens d'élaboration.

Cependant, le séquencement multitâche se caractérise par les différentes points suivants. En premier lieu, il impose une structure complexe de la gestion des interruptions au niveau du circuit de commande afin de coordonner la réalisation des différentes fonctions dans les différentes organes. Par ailleurs, il nécessite l'utilisation de mémoires tampon de taille importante afin de mémoriser les résultats intermédiaires générés par les différentes fonctions. En outre il accroît la complexité de la synchronisation du traitement du signal par rapport à celle du système GSM. Une conséquence immédiate de ces caractéristiques est la nécessité de prévoir des modules spécifiques pour les besoins du séquencement multitâches, ce qui entraîne une augmentation de la surface de silicium. Cela n'est souhaitable ni pour le coût du circuit ni pour sa taille, facteurs particulièrement importants dans le cas de terminaux portables.

La présente invention a ainsi pour objet un mode de séquencement du traitement numérique du signal qui est du type monotâche ou série.

Le séquencement du traitement du signal s'applique dans le mode communication d'un système de radiotéléphone cellulaire numérique pour acheminer une communication de parole numérisée entre un terminal et une station de base au moyen d'un canal de communication, ce système faisant appel à des multitrames comprenant des trames composées chacune d'intervalles de temps, cette communication prenant place sur certaines au moins de ces trames appelées trames de trafic, le terminal disposant d'un intervalle de temps d'émission à destination de la station de base et d'un intervalle de temps de réception en provenance de cette station de base, la communication étant composée de blocs codés correspondant à des groupes d'échantillons de parole, chaque bloc codé étant formé de 2.s sous-blocs acheminés durant des trames de trafic successives, le pième sous-bloc d'un bloc codé et le (p+s)ième sous-bloc du bloc codé précédent étant combiné dans un paquet, le pième paquet, qui prend place dans un intervalle de temps, ces multitrames comprenant un nombre de trames de trafic qui est un multiple du nombre de sous-blocs 2.s, la première trame de trafic d'une des multitrames étant utilisée pour transmettre le premier sous-bloc du nième bloc codé, une trame de trafic quelconque de la multitrame étant identifiée par l'expression s.j+p ou p varie de 1 à s, et j est un entier positif ou nul, et, selon l'invention, est caractérisé en ce que,

- durant chaque trame de trafic sont effectués :

  + un traitement de configuration,
  + le traitement d'un intervalle de temps de réception pour récupérer le pième sous-bloc du (j+n)ième bloc codé et le (p+s)ième sous-bloc du (j+n-1)ième bloc codé à partir du pième paquet de réception,
  + le traitement d'un intervalle de temps d'émission pour regrouper le pième sous-bloc du (j+n)ième bloc codé et le (p+s)ième sous-bloc du (j+n-1)ième bloc codé et former le pième paquet d'émission,

- durant une trame de trafic particulière, la trame d'émission, pour chaque valeur de j est effectué de plus le traitement d'un bloc d'émission consistant à former le (j+n+1)ième bloc codé à émettre à partir d'un groupe d'échantillons de parole à émettre,
- durant une trame de traffic particulière, la trame de réception, pour chaque valeur de j est effectué de plus le traitement d'un bloc de réception consistant à récupérer le (j+n-2)ième bloc codé reçu et à restituer le groupe d'échantillons de parole reçu qui lui correspond,
- lesdits traitements sont réalisés séquentiellement.

Il ressort de cet agencement que chaque groupe d'informations est traité dès qu'il est disponible, ce qui évite des étapes intermédiaires.

Selon une spécificité du séquencement du traitement du signal dans le mode communication d'un système de radiotéléphone cellulaire numérique, pour une même valeur de j, la trame d'émission et la trame de réception sont deux trames distinctes, ce qui correspond à deux valeurs de p distinctes.

La charge de travail est ainsi répartie dans le temps pour minimiser la puissance de calcul nécessaire.

De plus, dans le séquencement du traitement du signal dans le mode communication d'un système de radiotéléphone cellulaire numérique, les trames d'émission correspondant aux différentes valeurs de j sont identifiées par la même valeur de p.

De même, dans le séquencement du traitement du signal dans le mode communication d'un système de radiotéléphone cellulaire numérique, les trames de réception correspondant aux différentes valeurs de j sont identifiées par la même valeur de p.

De cette manière, le séquencement présente une structure périodique, ce qui le simplifie.

Par ailleurs, dans le séquencement du traitement du signal dans le mode communication d'un système de radiotéléphone cellulaire numérique, ce système étant de plus prévu pour que les différentes stations de base diffusent des signaux sur des canaux de commande, durant l'une au moins des trames de trafic est effectué un traitement supplémentaire pour mesurer la puissance du signal reçu sur l'un de ces canaux de commande.

Les temps morts d'une trame sont ainsi mis à profit pour préparer un éventuel transfert de communication d'une station de base vers une autre station de base.

Selon une première caractéristique additionnelle du séquencement du traitement du signal dans le mode communication d'un système de radiotéléphone cellulaire numérique, le traitement de configuration comprend uniquement deux opérations :

- une première opération, effectuée en premier lieu dans l'une des trames de trafic pour préciser les autres traitements à réaliser durant cette trame de trafic,
- une dernière opération, effectuée à la suite de ces autres traitements permettant de disposer des résultats qu'ils ont produits, indiquant ainsi la fin des traitements prévus dans la trame de trafic.

Selon une deuxième caractéristique additionnelle du séquencement du traitement du signal dans le mode communication d'un système de radiotéléphone cellulaire numérique, le traitement d'un intervalle de temps d'émission comprend une opération de chiffrement du pième paquet d'émission, puis une opération de formation d'un palier à partir de ce paquet et de modulation de ce palier, la communication de parole numérisée étant composée de tels paliers.

Selon une troisième caractéristique additionnelle du séquencement du traitement du signal dans le mode communication d'un système de radiotéléphone cellulaire numérique, le traitement d'un intervalle de temps de réception comprend les opérations suivantes :

- traitement préalable d'un palier reçu,
- démodulation de ce palier pour définir le pième paquet de réception, ce paquet faisant ensuite l'objet d'un déchiffrement correspondant au chiffrement effectué sur les paquets d'émission.

Selon une quatrième caractéristique additionnelle du séquencement du traitement du signal dans le mode communication d'un système de radiotelephone cellulaire numérique, le traitement d'un bloc d'émission comprend les opérations suivantes :

- codage de parole du groupe d'échantillons de parole à émettre pour former un bloc de parole d'émission,
- codage de canal de ce bloc de parole d'émission pour définir le bloc codé à émettre.

Selon une cinquième caractéristique additionnelle du séquencement du traitement du signal dans le mode communication d'un système de radiotéléphone cellulaire numérique, le codage de parole est précédé d'un codage préalable de la parole effectué en temps réel sur les échantillons de parole à émettre.

Selon une sixième caractéristique additionnelle du séquencement du traitement du signal dans le mode communication d'un système de radiotéléphone cellulaire numérique, le traitement d'un bloc de réception comprend les opérations suivantes :

- décodage de canal du bloc codé reçu correspondant au codage de canal pour restituer un bloc de parole reçu,
- décodage de parole du bloc de parole reçu correspondant au codage de parole pour restituer le groupe d'échantillons de parole reçu.

Selon une septième caractéristique additionnelle du séquencement du traitement du signal dans le mode communication d'un système de radiotéléphone cellulaire numérique, le décodage de parole est suivi d'un décodage complémentaire de la parole, effectué en temps réel, qui fournit les échantillons de parole reçus.

Il est de plus prévu que les différentes opérations à l'exception des opérations de codage préalable et décodage complémentaire soient réalisées séquentiellement. Le caractère monotâche du séquencement étant ainsi renforcé, ce qui permet de répartir la charge de travail dans le temps afin d'égaliser la puissance de calcul nécessaire en fonction du temps.

Dans une variante de réalisation du séquencement du traitement du signal dans le mode communication d'un système de radiotéléphone cellulaire numérique, les multitrames comprenant de plus chacune au moins une trame de signalisation utilisée pour la transmission d'informations de signalisation au moyen de blocs de signalisation codés entre le terminal et la station de base, chaque bloc de signalisation codé étant acheminé par paquets durant t trames de signalisation successives, chaque bloc de signalisation codé étant formé de 2.t sous-blocs regroupés par paire dans ces paquets, une trame de signalisation quelconque étant identifiée par l'expression $MT = t.(i-1)+q$ où q varie de 1 à t et i est un entier positif représentant le numéro d'ordre d'un bloc de signalisation codé,

- durant chaque trame de signalisation sont effectuées :

+ une procédure de configuration précisant notamment la valeur de q,
+ une procédure de réception pour récupérer les deux sous-blocs du qième paquet du iième bloc de signalisation codé de réception,
+ une procédure d'émission pour regrouper les deux sous-blocs du qième paquet du iième bloc de signalisation codé d'émission,

- durant une trame de signalisation particulière, la trame de décodage, pour chaque valeur de i, est effectuée postérieurement à la réception du dernier paquet d'un bloc de signalisation codé de réception une procédure de décodage pour restituer les informations de signalisation de réception correspondantes,
- durant une trame de signalisation particulière, la trame de codage, pour chaque valeur de i, est effectuée antérieurement à l'émission du premier paquet d'un bloc de signalisation une procédure de codage des informations de signalisation d'émission correspondantes.

Ainsi, le traitement d'un canal de signalisation procède de la même démarche que celle adoptée précédemment.

Avantageusement, dans le séquencement du traitement du signal dans le mode communication d'un système de radiotéléphone cellulaire numérique, pour une même valeur de i, la trame de décodage et la trame de codage sont deux trames distinctes, ce qui correspond à deux valeurs distinctes de q.

De plus, dans le séquencement du traitement du signal dans le mode communication d'un système de radiotéléphone cellulaire numérique, les trames de décodage correspondant aux différentes valeurs de i sont identifiées par la même valeur de q.

En outre, dans le séquencement du traitement du signal dans le mode communication d'un système de radiotéléphone cellulaire numérique, les trames de codage correspondent aux différentes valeurs de i sont identifiées par la même valeur de q.

Dans un mode de réalisation préférentiel du séquencement du traitement du signal dans le mode communication d'un système de radiotéléphone cellulaire numérique, la procédure de décodage du iième bloc de signalisation codé prend place durant la (t.i)ième trame de signalisation après la procédure de réception.

De manière analogue, dans le séquencement du traitement du signal dans le mode communication d'un système de radiotéléphone cellulaire numérique, la procédure du codage relative au ième bloc de signalisation codé prend place durant la [t(i-1)+1]ième trame de signalisation avant la procédure d'émission.

Par ailleurs, dans le séquencement du traitement du signal dans le mode communication d'un système de radiotéléphone cellulaire numérique, ce système étant de plus prévu pour que les différentes stations de base diffusent des signaux sur des canaux de commande, durant l'une au moins des trames de signalisation est effectué un traitement supplémentaire OP3 pour mesurer la puissance du signal reçu sur l'un des canaux de commande.

Il est de plus prévu que les différentes procédures soient réalisées séquentiellement, ce qui procure les avantages déjà présentés.

Dans une autre variante de réalisation du séquencement du traitement du signal dans le mode communication d'un système de radiotéléphone cellulaire numérique, les multitrames comprenant de plus une trame de repos, une fenêtre d'observation nécessaire à la réception d'un canal de contrôle de fréquence supportant un signal de fréquence prédéterminée et prenant place entre la fin de celui des traitements ou des procédures effectué durant la trame précédent cette trame de repos et la fin de cette trame de repos, une plage d'analyse s'étendant ainsi du début de cette fenêtre d'observation à la fin de la trame de repos, durant l'une des plages d'analyse au moins est effectué un traitement de contrôle de fréquence comprenant les opérations suivantes :

- une opération d'initialisation,
- une opération de contrôle de fréquence afin d'établir si la fréquence prédéterminée a été détectée durant la fenêtre d'observation,
- une opération terminale indiquant la fin du traitement de contrôle de fréquence et le résultat de la détection précédente comprenant, s'il est positif, un message de détection.

Comme précédemment, le traitement d'un canal de contrôle de fréquence se prête au mieux à un séquencement monotâche et procure donc les avantages déjà mentionnés.

De plus, dans le séquencement du traitement du signal dans le mode communication d'un système de radiotéléphone cellulaire numérique, la détection de la fréquence prédéterminée étant réalisée, un canal de synchronisation associé au canal de contrôle de fréquence supportant un paquet de synchronisation situé dans une des fenêtres d'observation à l'endroit indiqué dans le message de détection, le paquet de synchronisation comprenant un message de synchronisation ayant fait l'objet d'un codage, durant la plage d'analyse correspondant à cette fenêtre d'observation est effectué un traitement de synchronisation comprenant les opérations suivantes :

- opération préliminaire précisant notamment la position temporelle du paquet de synchronisation,
- opération de synchronisation pour récupérer le message de synchronisation à partir du paquet de synchronisation,
- opération finale indiquant la fin du traitement de synchronisation et fournissant le message de synchronisation.

La remarque concernant le traitement d'un canal de contrôle de fréquence vaut également pour celui d'un canal de synchronisation.

Il peut être souhaitable que, dans le séquencement du traitement du signal dans le mode communication d'un système de radiotéléphone cellulaire numérique, le traitement de contrôle de fréquence associé à une trame de repos soit regroupé avec les traitements ou les procédures réalisés au cours de la trame précédant la trame de repos, l'ensemble de ces traitements et/ou procédures s'étalant sur les deux trames concernées, l'opération d'initialisation et l'opération terminale étant alors incorporées dans le traitement de configuration ou dans la procédure de configuration.

Par analogie, dans le séquencement du traitement du signal dans le mode communication d'un système de radiotéléphone cellulaire numérique, le traitement de synchronisation associé à une trame de repos sera regroupé avec les traitements ou les procédures réalisés au cours de la trame précédant la trame de repos, l'ensemble de ces traitements et/ou procédures s'étalant sur les deux trames concernées, l'opération préliminaire et l'opération finale étant alors incorporées dans le traitement de configuration ou dans la procédure de configuration.

Ainsi le séquencement présente la particularité de suivre le cadencement des trames.

L'invention sera maintenant mieux comprise dans le cadre d'exemples de réalisation donnés à titre non limitatif en se référant aux figures annexées qui représentent :

- la figure 1, la structure d'une trame de trafic,
- la figure 2, la structure d'une trame de repos et de la trame de trafic qui la précède,
- la figure 3, l'organisation des blocs codés et des sous-blocs les composant au cours d'une multitrame,
- la figure 4, un tableau descriptif du séquencement selon l'invention précisant pour une trame donnée quelles sont les opérations qui sont effectuées.

En matière d'introduction, il sera rappelé que le terminal et la station de base, dans le cadre du GSM, communiquent sur des canaux radio qui sont soient des canaux de communication proprement dits destinés à acheminer de la parole ou des données, canaux dits TCH, soit des canaux de commande utilisés pour établir et maintenir ces communications. On considèrera par la suite que le canal TCH est un canal de parole "plein débit" au sens du GSM correspondant à un débit de 13 kbits après codage de la parole.

Il est par ailleurs prévu de faire précéder la démodulation proprement dite d'un traitement préalable d'un palier à la réception qui consiste, pour un palier reçu, à effectuer une correction de la composante continue introduite par le circuit radio et une translation de fréquence découlant de la modulation GMSK employée.

Le mode communication sera décomposé en phases de mode. Cette décomposition donnée à titre d'exemple correspond aux échanges d'information entre le circuit de commande et le circuit de traitement du signal : chaque phase de mode est déclenchée dans ce dernier par le circuit de commande. Il en découle que la description qui suit s'attachera essentiellement au séquencement du circuit de traitement du signal.

Chaque phase de mode sera également subdivisée en opérations étant entendu que certaines opérations sont communes à plusieurs phases de mode. Ces opérations dont la liste suit, seront référencées par un numéro :

| | |
|---|---|
| Opération OP1 : | acquisition et interprétation d'un message du circuit de commande fournissant les différentes données nécessaires et les paramètres de configuration; |
| Opération OP2 : | traitement préalable d'un palier à la réception; |
| Opération OP3 : | mesure de la puissance du signal en bande de base reçu; |
| Opération OP4 : | traitement d'un canal de contrôle de fréquence dit canal FCCH en réception consistant à estimer la fréquence unique émise sur ce canal afin d'obtenir une synchronisation fréquentielle grossière entre le terminal et la station de base (recommandation 05.01 du GSM); |
| Opération OP5 : | traitement d'un canal de synchronisation dit canal SCH en réception consistant à affiner la synchronisation fréquentielle et à obtenir la synchronisation temporelle entre le terminal et la station de base (recommandation 05.01 du GSM); |
| Opération OP6 : | traitement de base d'un paquet à la réception consistant à effectuer la démodulation d'un palier ayant subi l'opération OP2, la restitution d'un paquet à partir de ce palier démodulé, et le déchiffrement de ce paquet pour récupérer les deux sous-blocs le composant; |
| Opération OP7 : | décodage de canal d'un bloc codé; |
| Opération OP8 : | traitement de la parole à la réception; |
| Opération OP9 : | codage préalable de la parole défini dans la recommandation 06.10 du GSM par le terme anglais "Speech preprocessing"; il consiste en une annulation de ten- |

sion de décalage ("offset" dans la recommandation) et en un filtrage d'accentuation ("preemphasis" dans la recommandation);

Opération OP10 : Décodage complémentaire de la parole défini également dans la recommandation 06.10 du GSM par le terme anglais "Speech postprocessing"; il consiste en un filtrage de modération ("Deemphasis" dans la recommandation);

Opération OP11 : traitement de la parole à l'émission;

Opération OP12 : codage de canal d'un bloc;

Opération OP13 : traitement de base d'un paquet à l'émission consistant à regrouper deux sous-blocs et à en effectuer le chiffrement afin d'obtenir un paquet.

Opération OP14 : traitement complémentaire d'un paquet à l'émission consistant à effectuer la formation d'un palier à partir d'un paquet et à moduler ce palier.

Opération OP15 : transmission d'un message au circuit de commande fournissant les différents résultats qui lui sont destinés et/ou l'état du circuit de traitement du signal.

Les différentes phases de mode seront également identifiées par un numéro et affectés des différentes opérations qu'elles incluent :

0) Initialisation : opérations OP1 et OP15
1) Traitement trame de base : opérations OP1, OP2, OP3, OP6,OP9, OP10, OP13, OP14, OP15.
2) Traitement trame et codage : opérations OP1, OP2, OP3, OP6, OP9, OP10, OP11, OP12, OP13, OP14, OP15.
3) Traitement trame et décodage : opérations OP1, OP2, OP3, OP6, OP7, OP8, OP9, OP10, OP13, OP14, OP15.
4) Traitement trame de signalisation : opérations OP1, OP2, OP3, OP6, OP7, OP9, OP10, OP12, OP13, OP14, OP15.
5) Traitement contrôle de fréquence : opérations OP1, OP2, OP3, OP4, OP6, OP9, OP10, OP11, OP12, OP13, OP14, OP15.
6) Traitement synchronisation : opérations OP1, OP2, OP3, OP5, OP6, OP9, OP10, OP11, OP12, OP13, OP14, OP15.

Il est maintenant nécessaire de rappeler l'organisation temporelle des différents canaux de liaison entre le terminal et la station de base, organisation partiellement imposée par le GSM.

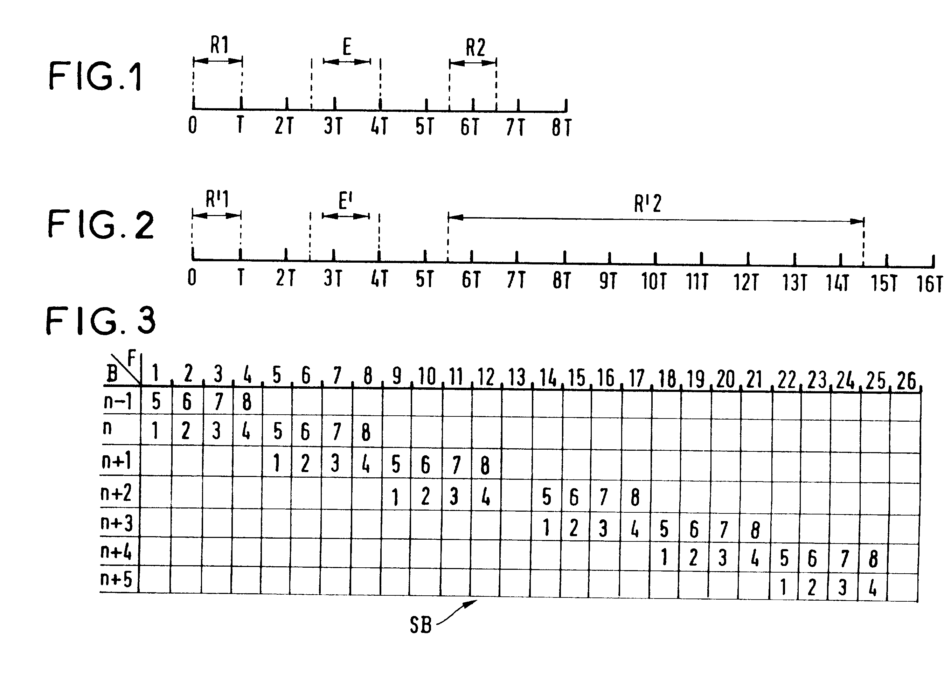

Les intervalles de temps ont une durée T et une trame a, par conséquent, une durée de 8T. En référence à la figure 1 le terminal dispose d'une première fenêtre de réception R1 correspondant à un intervalle de temps de réception qui lui est attribué par la station de base, le début de cette fenêtre étant par convention l'origine des temps. La fenêtre d'émission E, correspondant à l'intervalle de temps d'émission de ce terminal prendra place à une position déterminée par la station de base entre 2,5 T et 4T, ce qui est une contrainte du GSM. Les deux fenêtres précédentes se répètent avec une périodicité égale à celle de la trame. Entre les temps 4T, fin de la fenêtre d'émission E et 8T début de la première fenêtre de réception R1 suivante, rien n'est spécifié par le GSM. Cette période étant disponible, elle sera mise à profit pour faire différents traitements, ce qui ne doit pas être considéré comme une obligation ni, par conséquent, comme une limitation de l'invention.

Sur les 24 premières trames de la multitrame à 26, il est donc prévu de définir une seconde fenêtre de réception R2 prenant place entre 5,5 T et 6,5 T. L'usage fait de cette 2ème fenêtre de réception sera précisé ultérieurement à l'occasion de la description détaillée de séquencement.

Sur les deux dernières trames de cette multitrame, l'agencement est un peu différent, comme cela ressort de la figure 2. La première fenêtre de réception R'1 et la fenêtre d'émission E' prennent place sur la vingt-cinquième trame dans les mêmes conditions que précédemment, mais elles ne se répètent pas dans la trame suivante, par opposition au cas précédent. Il est ici prévu de définir une deuxième fenêtre de réception R'2 de durée 9T, à cheval sur les vingt-cinquième et vingt-sixième trame, commençant à 5,5 T en prenant comme origine des temps le début de la vingt-cinquième trame. L'usage fait de cette seconde fenêtre de réception R'2 que l'on conviendra d'appeler fenêtre d'observation pour éviter toute confusion sera précisé ultérieurement à l'occasion de la description détaillée du séquencement.

On rappellera ici utilement la structure du canal TCH telle que définie par le GSM.

Un bloc de parole destiné au circuit radio subit un codage de canal qui produit un bloc codé B formé de huit sous-blocs SB. Les blocs codés sont ensuite soumis à un entrelacement pour composer un bloc entrelacé formé des quatre premiers sous-blocs d'un bloc codé et des quatre derniers sous-blocs du bloc codé précédent. Le chiffrement, à partir d'un bloc entrelacé définit quatre paquets qui seront émis chacun durant une fenêtre d'émission soit sur le même intervalle de temps de quatre trames successives.

Ces paquets sont ainsi composés :

- premier paquet : premier sous-bloc d'un bloc codé et cinquième sous-bloc du bloc codé précédent.
- deuxième paquet : deuxième sous-bloc du bloc codé et sixième sous-bloc du bloc codé précédent.
- troisième paquet : troisième sous-bloc du bloc codé et septième sous-bloc du bloc codé précédent.

- quatrième paquet : quatrième sous-bloc du bloc codé et huitième sous-bloc du bloc codé précédent.

Il apparaît ainsi qu'un bloc codé B nécessite huit trames pour sa transmission, une pour chaque sous-bloc.

On se placera par convention sur la multitrame à 26 dans laquelle la première trame véhicule le premier sous-bloc du nième bloc codé pour expliciter le tableau faisant l'objet de la troisième figure. Les trames 13 et 26 ne sont pas utilisées pour la communication de parole. Dans ce tableau, les colonnes correspondent aux trames F, les lignes aux blocs codés B, les cases elles-mêmes identifiant les numéros des sous-blocs SB appartenant aux blocs codés de la ligne correspondante et émis durant la trame de la colonne correspondante. Ainsi les deux sous-blocs d'un même paquet figurent dans la même colonne.

La multitrame permet donc l'acheminement de 6 blocs codés, les quatre premiers sous-blocs du (n-1)ième bloc codé étant émis lors de la multitrame précédente et les quatre derniers sous-blocs du (n+5)ième bloc codé étant émis sur la multitrame suivante.

Comme mentionné précédemment les trames 13 et 26 ne sont pas utilisées pour la communication de parole. Il est alors possible de définir des trames de trafic TF, les trames réellement utilisées comme suit :

- TF = F si $1 \leq F \leq 12$
- TF = F-1 si $14 \leq F \leq 25$

On peut dès lors généraliser le tableau précédent en indiquant que le ième sous-bloc du kième bloc codé est émis sur la trame de trafic TF = i + 4 (k-n).

Ce sont les blocs destinés au circuit radio ou blocs d'émission qui ont été considérés jusqu'à présent. La situation est exactement identique en ce qui concerne les blocs de réception ou blocs provenant du circuit radio, si bien que le tableau de la figure 3 et des notations précédentes sont également valables dans ce cas.

Il est par ailleurs nécessaire de préciser une contrainte temporelle définie par le GSM au niveau de l'interface entre le circuit de traitement du signal et le circuit de conversion. Les groupes d'échantillons de parole correspondent à 20 ms de parole soit une durée de 60 ms pour 3 groupes, ce qui représente la durée de 13 trames. D'autre part la transmission d'un bloc s'étend sur 8 trames (blocs n, n+1, n+3 et n+4) ou 9 trames (blocs n+2 et n+5) et par conséquent présente une durée variable. Il est donc prévu, dans le circuit de traitement du signal, un organe de régularisation doté par exemple d'une mémoire tampon, qui reçoit continument les échantillons de parole issus du circuit de conversion et qui les réunit en groupes de 160 au moment opportun de manière à compenser cette variation dans la durée de transmission. Avantageusement, cet organe de régularisation aura également la charge du codage préalable de la parole correspondant à l'opération OP9. De même, la restitution des groupes de 160 échantillons à cet organe de régularisation n'a pas non plus, la périodicité souhaitée de 20 ms. Celui-ci a donc également pour fonction de délivrer continument les échantillons de parole à partir de ces groupes restitués de manière non périodique. Avantageusement, l'organe de régularisation aura également la charge du décodage complémentaire de la parole correspondant à l'opération OP10. Cet organe ne présentant pas de difficulté particulière quant à sa réalisation qui est à la portée de l'homme de l'art, il ne sera pas plus détaillé.

Dans la suite de la description il sera donc considéré que les opérations OP9 et OP10 sont effectuées dans l'organe de régularisation. De plus, dans ce cas, ces opérations peuvent être réalisées en temps réel, au fil de l'eau. C'est cette solution qui sera retenue. Ainsi les échantillons de parole en provenance du circuit de conversion subiront l'opération OP9 au fur et à mesure de leur acquisition avant d'être mémorisés pour former des groupes de 160 échantillons. De même les groupes de 160 échantillons issus du traitement de la parole à la réception seront mémorisés avant de subir les opérations OP10 pour délivrer les échantillons de parole un à un au circuit de conversion au rythme de 8 kHz. En conséquence ces deux opérations seront effectuées en permanence, indépendamment de toute contrainte de séquencement.

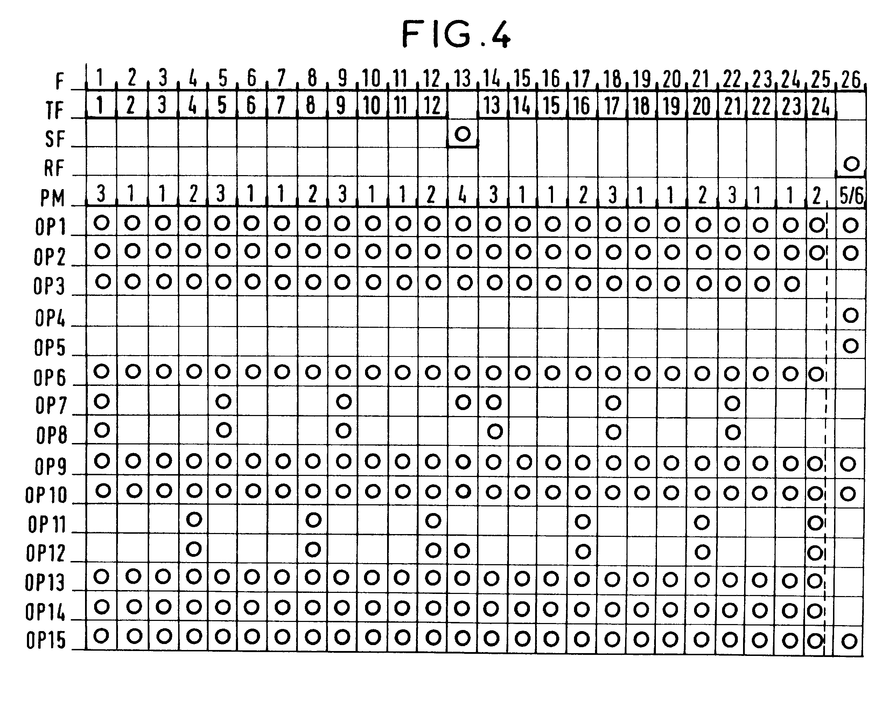

Les différents éléments nécessaires à la compréhension de l'invention étant rappelés le séquencement du traitement du signal sera maintenant décrit en se référant à la figure 4.

Comme défini précédemment, la multitrame à 26 comprend 24 trames de trafic TF, ce qui correspond à 6 blocs entrelacés comprenant chacun 4 paquets formés eux-mêmes de deux sous-blocs. On peut donc repérer les trames de traffic par l'expression suivante :

$$TF = 4j + p$$

où      j représente un bloc entrelacé et varie de 0 à 5 tandis que p qui représente un paquet varie de 1 à 4.

On considère comme auparavant la multitrame à 26 dans laquelle le premier sous-bloc de la trame 1 est celui du nième bloc codé. De plus, le nième bloc entrelacé comprend les quatre premiers sous-blocs du nième bloc codé et les quatre derniers sous-blocs du (n-1)ième bloc codé.

Le séquencement sera maintenant examiné en relation avec la valeur de p, compte-tenu du fait que la phase de mode O qui est une simple initialisation du circuit de traitement de signal ne présente pas de difficulté particulière. En effet, elle est effectuée une seule fois au début du mode communication et n'est donc pas critique, notamment au niveau temporel. Les autres phases de mode sont déclenchées par le circuit de commande au début de chaque trame.

p = 1, phase de mode 3, PM = 3

- opération OP1 : le circuit de commande positionne le circuit de traitement du signal dans cette phase de mode en lui fournissant les informations nécessaires.
- opération OP2 : traitement préalable à la réception du palier reçu dans la première fenêtre de réception R1.
- opération OP6 : démodulation de ce palier, restitution du paquet correspondant pour récupérer le premier sous-bloc du (j+n)ième bloc et le cinquième sous-bloc du (j+n-1)ième bloc codé.
- opération OP7 : décodage de canal du (j+n-2)ième bloc codé à partir des huit sous-blocs le composant.
- opération OP8 : traitement de la parole à la réception du (j+n-2)ième bloc de parole correspondant et restitution de ce bloc à l'organe de régularisation.
- opération OP9 : codage préalable des échantillons de parole reçus.
- opération OP10 : décodage complémentaire des échantillons de parole à émettre.
- opération OP13 : regroupement du premier sous-bloc du (j+n)ième bloc codé à émettre et, du cinquième sous-bloc du (j+n-1)ième bloc codé à émettre et chiffrement afin de former un paquet.
- opération 14 : formation d'un palier à partir du paquet précédent et modulation de ce palier.
- opération 15 : transmission au circuit de commande d'un message fournissant les différents résultats qui lui sont destinés et/ou de l'état du circuit de traitement du signal.

Comme cela a déjà été envisagé, on peut prévoir une opération supplémentaire à titre optionnel qui prend place avant l'opération OP15. Il s'agit de l'opération OP3 qui consiste à effectuer la mesure de la puissance du signal numérique en bande de base reçu sur un canal différent du canal de traffic TCH au cours de la deuxième fenêtre de réception R2.

Ce signal sera par exemple celui qu'émet une station de base voisine sur le canal de diffusion, nommé canal BCCH par le GSM.

Cette mesure, dans le cas d'un terminal mobile, permet de préparer le transfert de la communication établie avec une première station de base vers une seconde station de base plus proche, procédure connue sous le terme anglais de "hand-over".

p = 2 ou 3 : phase de mode 1, PM = 1

- opération OP1 : le circuit de commande positionne le circuit de traitement du signal dans cette phase de mode en lui fournissant les informations nécessaires.
- opération OP2 : traitement préalable à la réception du palier reçu dans la première fenêtre de réception R1.

- opération OP6 : démodulation de ce palier, restitution du paquet correspondant pour récupérer le pième sous-bloc du (j+n)ième bloc codé et le (p+4)ième sous-bloc du (j+n-1)ième bloc codé.
- opération OP9 : codage préalable des échantillons de parole reçus.
- opération OP10 : décodage complémentaire des échantillons de parole à émettre.
- opération OP13 : regroupement du pième sous-bloc du (j+n)ième bloc codé à émettre et du (p+4)ième sous-bloc du (j+n-1)ième bloc codé à émettre et chiffrement afin de former un paquet.
- opération OP14 : formation d'un palier à partir du paquet précédent et modulation de ce palier.
- opération OP15 : transmission au circuit de commande d'un message fournissant les différents résultats qui lui sont destinés et/ou de l'état du circuit de traitement du signal.

De même que dans la phase de mode 3, on peut prévoir d'effectuer l'opération OP3 avant l'opération OP15.

p = 4 : phase de mode 2, PM = 2.

- opération OP1 : le circuit de commande positionne le circuit de traitement du signal dans cette phase de mode en lui fournissant les informations nécessaires.
- opération OP2 : traitement préalable à la réception du palier reçu dans la première fenêtre de réception R1.
- opération OP6 : démodulation de ce palier, restitution du paquet correspondant pour récupérer le quatrième sous-bloc du (j+n)ième bloc codé et le huitième sous-bloc du (j+n-1)ième bloc codé.
- opération OP9 : codage préalable des échantillons de parole reçus.
- opération OP10 : décodage complémentaire des échantillons de parole à émettre.
- opération OP11 : traitement de la parole à l'émission du (j+n+1)ème bloc de parole.
- opération OP12 : codage de canal de ce bloc de parole afin de former le (j+n+1)ème bloc codé à émettre.
- opération OP13 : regroupement du quatrième sous-bloc du (j+n)ième bloc codé à émettre et du huitième sous-bloc du (j+n-1)ième bloc codé à émettre et chiffrement afin de former un paquet.
- opération OP14 : formation d'un palier à partir du paquet précédent et modulation de ce palier.
- opération OP15 : transmission au circuit de commande d'un message fournissant les différents résultats qui lui sont destinés et/ou de l'état du circuit de traitement du signal.

De même que dans la phase de mode 3, on peut prévoir d'effectuer l'opération OP3 avant l'opération OP15.

Il apparaît ainsi que de nombreuses opérations sont communes aux phases de mode 1, 2, 3 qui sont activées durant les trames de trafic.

Ces opérations peuvent être regroupées en traitements comme suit :

- traitement de configuration : opération OP1 et OP15
- traitement d'un intervalle de temps de réception : opérations OP2, OP6, OP9 en adoptant la notation générique formulée dans la phase de mode 1.
- traitement d'un intervalle de temps d'émission : opération OP10, OP13, OP14 en adoptant également la même notation.
- traitement de mesure de puissance : opération OP3, optionnelle comme cela a été précisé.

Les opérations spécifiques aux phases de mode 2 et 3 peuvent également être respectivement regroupées comme suit :

- traitement d'un bloc à l'émission : opérations OP11 et OP12.
- traitement d'un bloc à la réception : opérations OP7 et OP8.

Il s'ensuit que l'exemple adopté peut se généraliser aisément au cas d'un système ainsi conçu :

- chaque bloc codé est formé de 2.s sous-blocs où s est un nombre entier,
- chaque bloc entrelacé est formé de s paquets, le pième paquet comprenant le pième sous-bloc d'un bloc codé et le (p+s)ième sous-bloc du bloc codé précédent,
- la multitrame comprend un nombre de trames de trafic qui est un multiple du nombre de sous-blocs (2.s).

Exception faite des opérations OP9 et OP10 que l'on a choisi ici d'effectuer en temps réel, le séquencement ainsi défini se prête bien à une réalisation de type monotâche. Les différents traitements prévus seront à cet effet réalisés séquentiellement, étant entendu que le traitement de configuration sera fictivement décomposé en deux traitements correspondant aux opérations OP1 et OP15 occupant respectivement la première et la dernière place. De plus, les différentes opérations prévues au cours d'un traitement particulier seront également réalisées séquentiellement à l'exception, ici aussi, des opérations OP9 et OP10.

Les différentes traitements effectués sur les trames de trafic qui concernent la communication proprement dit étant décrits, ce sont maintenant les traitements complémentaires réalisés selon le séquencement objet de l'invention qui seront abordés.

Il a été précisé précédemment que la multitrame à 26 comporte des trames de trafic TF. Elle comprend aussi d'autres trames parmi lesquelles figurent des trames de signalisation SF pour acheminer des informations de signalisation par blocs. Dans le système GSM, pour une communication plein débit, c'est le cas par exemple de la trame 13 qui est utilisée par le canal de signalisation lente associée au canal de traffic nommé canal SACCH pour l'expression anglaise "Slow Associated Control Channel".

La structure du canal SACCH telle que définie par le GSM diffère quelque peut de celle du canal TCH. Un bloc de signalisation destiné au circuit radio et véhiculé par le canal SACCH subit également un codage de canal qui produit un bloc codé formé de huit sous-blocs. Cependant, les blocs codés sont ensuite soumis à un entrelacement différent pour former un bloc entrelacé qui aboutira à la formation de paquets ainsi composés :

- premier paquet : premier et cinquième sous-blocs d'un bloc codé,
- deuxième paquet : deuxième et sixième sous-blocs de ce bloc codé,
- troisième paquet : troisième et septième sous-blocs de ce bloc codé,
- quatrième paquet : quatrième et huitième sous-blocs de ce bloc codé.

Il apparaît ainsi qu'un bloc codé nécessite quatre trames, c'est-à-dire également quatre multitrames, pour sa transmission, une pour chaque paquet. On se placera par convention sur la multitrame à 26 MT dans laquelle c'est le qième paquet du iième bloc codé qui est émis :

$$MT = 4(i-1)+ q$$

Ce sont les blocs destinés au circuit radio ou blocs d'émission qui ont été considérés jusqu'à présent. La situation est exactement identique en ce qui concerne les blocs de réception ou blocs provenant du circuit radio.

Le séquencement de la treizième trame qui fait appel à la quatrième phase de mode, PM = 4, sera maintenant examiné en fonction du numéro de multitrame MT et plus précisément en relation avec la valeur de q.

- opération OP1 : le circuit de commande positionne le circuit de traitement du signal dans cette phase de mode en lui précisant de plus la valeur de q.
- opération OP2 : traitement préalable à la réception du palier reçu.
- opération OP6 : démodulation de ce palier, restitution du paquet correspondant pour récupérer le qième et le (q+4)ième sous-bloc du iième bloc codé en réception.
- opération OP7 : effectuée si q = 4, décodage de canal du iième bloc codé reçu à partir des huit sous-blocs le composant.

- opération OP9 : codage préalable des échantillons de parole reçus.
- opération OP10 : décodage complémentaire des échantillons de parole à transmettre.
- opération OP12 : effectuée si q = 1, codage de canal pour former le iième bloc codé à émettre.
- opération OP13 : formation du qième paquet à émettre avec les qième et (q+4)ième sous-blocs du iième bloc codé à émettre.
- opération OP14 : formation d'un palier à partir du paquet précédent et émission de ce palier.
- opération OP15 : transmission au circuit de commande d'un message fournissant les différents résultats qui lui sont destinés, et/ou de l'état du circuit de traitement du signal.

De même que dans les phases de mode 1, 2 et 3 on peut également prévoir d'effectuer l'opération OP3 avant l'opération OP15.

Les différentes opérations peuvent être regroupés en procédures comme suit :

- procédure de configuration : opérations OP1 et OP15
- procédure de réception : opération OP2 et OP6
- procédure d'émission : opération OP13 et OP14
- procédure de décodage d'un bloc : opération OP7
- procédure de codage d'un bloc : opération OP12
- éventuellement, procédure supplémentaire : opération OP3

Il s'ensuit que l'exemple adopté peut se généraliser aisément au cas d'un système ainsi conçu :

- chaque bloc de signalisation codé est formé de 2.t sous-blocs où t est un nombre entier,
- un paquet comprend 2 sous-blocs d'un même bloc codé, la transmission de ce bloc nécessitant donc t paquets,
- la multitrame comprend une ou plusieurs trames de signalisation SF (la treizième dans l'exemple) pour acheminer ces blocs de signalisation, la notation MT correspondant de manière générale au numéro d'ordre des trames de signalisation,
- la procédure de décodage d'un bloc a lieu après la réception du dernier paquet correspondant à ce bloc,
- la procédure de codage d'un bloc a lieu avant l'émission du premier paquet correspondant à ce bloc.

La remarque précédente concernant le caractère séquentiel des différents traitements effectués au cours des trames de trafic s'applique naturellement dans le même cadre aux différentes procédures relatives aux trames de signalisation.

Le traitement des trames de signalisation étant exposé, ce sont maintenant les traitements de contrôle de fréquence et de synchronisation qui seront décrits.

Le multitrame à 26, outre les trames de trafic et de signalisation comprend également une trame de repos RF ou trame "idle" en anglais, qui est la vingt-sixième dans le système GSM. Durant cette trame de repos aucune information n'est échangée entre le terminal et la station de base à laquelle il est connecté.

On remarquera par ailleurs que si la troisième opération OP3 qui concerne la mesure de puissance n'est pas effectuée durant la vingt-cinquième trame, il est alors possible pour le terminal de recevoir un autre canal à partir de 5,5 T si l'origine des temps est prise au début de cette trame. La période comprise entre 5,5 T et 16 T est ainsi disponible pour effectuer les traitements en question qui seront initialisés avant le début de cette période.

Le terminal se place dorénavant sur la multitrame à 51 émise par une station de base voisine, avantageusement celle qu'il reçoit le mieux, afin de préparer un éventuel transfert de la communication de la station de base à laquelle il est connecté vers cette station de base voisine.

Parmi les canaux émis par cette station de base voisine, figurent notamment le canal de contrôle de fréquence FCCH et le canal de synchronisation SCH.

Le traitement de contrôle de fréquence consiste à détecter sur le canal FCCH un palier particulier formé d'une suite de bits à zéro, ce qui correspond, compte-tenu de la modulation utilisée, à une sinusoïde pure sur laquelle le terminal va pouvoir se synchroniser.

Etant donné la structure de la multitrame à 51 telle qu'elle apparaît notamment dans la recommandation 05.01 du GSM, il est nécessaire d'ouvrir une fenêtre de réception de durée 9T pour balayer cette multitrame, cette fenêtre se répétant toutes les 26 trames, afin d'avoir la certitude d'identifier la sinusoïde émise sur le canal FCCH. C'est donc la fenêtre d'observation R'2 mentionnée plus haut en rapport avec les vingt-cinquième et vingt-sixième trames qui sera utilisée.

Le séquencement de ce traitement qui correspond à la cinquième phase de mode, PM = 5 comprend donc les opérations suivantes :

- opération d'initialisation OP1 : le circuit de commande positionne le circuit de traitement du signal dans cette phase de mode en lui fournissant les informations nécessaires,
- opération OP2 : traitement préalable à la réception du palier reçu dans la fenêtre d'observation R'2.
- opération OP4 : traitement de ce palier pour détecter s'il correspond à un canal de contrôle de fréquence FCCH en estimant la fréquence reçue et en la comparant à un seuil déterminé pour décider s'il y a ou non détection FCCH,
- opération OP9 : codage préalable des échantillons de parole reçus,
- opération OP10 : décodage complémentaire des échantillons de parole à transmettre.

- opération terminale OP15 : transmission d'un message au circuit de commande précisant notamment s'il y a ou non détection FCCH et, si oui, la valeur de la fréquence reçue.

Le circuit de commande prévoit la répétition de cette phase de mode pour un canal déterminé tant qu'il n'y a pas en détection FCCH et tant que la multitrame à 51 n'a pas été totalement balayée. Si cette multitrame a été explorée sans succès, alors le circuit de commande prévoit la même procédure sur un canal différent.

L'activation de cette phase de mode ne respecte donc pas la périodicité de la multitrame à 26. Elle est variable par nature.

Une fois la détection FCCH obtenue, le circuit de commande peut déclencher le traitement de synchronisation. Ce traitement se fait sur un intervalle de temps particulier d'une trame de la multitrame à 51 qui achemine le palier de synchronisation qu'il s'agit de traiter.

Compte-tenu du décalage de synchronisation entre la multitrame à 51 et la multitrame à 26 vu par le terminal, cet intervalle de temps prend une position déterminée par le traitement de contrôle de fréquence dans un message de détection au cours d'une période commençant à 5,5 T et finissant à 14,5 T.

C'est pourquoi la fenêtre d'observation R'2 déjà mentionnée est utilisée ici aussi.

Le séquencement de ce traitement qui correspond à la sixième phase de mode comprend donc les opérations suivantes :

- opération préliminaire OP1 : le circuit de commande positionne le circuit de traitement du signal dans cette phase de mode en lui indiquant notamment la position temporelle du paquet de synchronisation,
- opération OP2 : traitement préalable à la réception du palier reçu dans la fenêtre d'observation R'2,
- opération OP5 : traitement du canal de synchronisation SCH consistant à effectuer le décodage du palier reçu formé d'une séquence d'apprentissage de 64 bits et d'une séquence d'information de synchronisation de 78 bits (recommandation 05.01 du GSM),
- opération OP9 : codage préalable des échantillons de parole reçus.
- opération OP10 : décodage complémentaire des échantillons de parole à transmettre.
- opération finale OP15 : transmission d'un message au circuit de commande comprenant notamment ces informations de synchronisation.

Le traitement de contrôle de fréquence et le traitement de synchronisation, tels qu'ils ont été présentés, sont déclenchés au cours d'une trame. Il ne faut pas voir là une limitation de l'invention. Il est en effet possible d'agencer les phases de mode d'une autre manière et par exemple de regrouper l'ensemble des opérations effectuées au cours de la vingt-quatrième trame de trafic (ou vingt-cinquième trame) et de la trame de repos qui lui fait suite sous réserve que la troisième opération OP3 ne soit pas effectuée durant la vingt-cinquième trame. S'il est prévu que le traitement associé à la trame de repos soit un traitement de contrôle de fréquence, l'opération d'initialisation et l'opération terminale sont supprimées, leurs contenus étant incorporés au traitement de configuration défini dans la phase de mode précédente. S'il est prévu que le traitement associé à la trame de repos soit un traitement de synchronisation, ce sont alors les opérations préliminaire et finale qui seront intégrés à ce même traitement de configuration.

L'homme de métier généralisera facilement l'agencement proposé ci-dessus au cas où la trame précédant la trame de repos est une trame de trafic quelconque. Il n'éprouvera pas plus de difficultés à appliquer une méthode similaire si la trame précédant la trame de repos est une trame de signalisation, les quatre opérations visées ci-dessus étant incorporées non plus dans le traitement de configuration de la phase précédente mais dans la procédure de configuration de cette trame.

Le séquencement ainsi décrit permet d'effectuer l'ensemble du traitement du signal au moyen de phases de mode qui sont toutes activées en synchronisme avec la périodicité des trames, si ce n'est que dans l'exemple de réalisation adopté, les opérations OP9 et OP10 sont effectuées en temps réel, indépendemment du rythme des trames.

**Revendications**

1. Séquencement du traitement du signal dans le mode communication d'un système de radiotéléphone cellulaire numérique pour acheminer une communication de parole numérisée entre un terminal et une station de base au moyen d'un canal de communication, ledit système faisant appel à des multitrames comprenant des trames (F) composées chacune d'intervalles de temps, ladite communication prenant place sur certaines au moins desdites trames appelées trames de trafic (TF), ledit terminal disposant d'un intervalle de temps d'émission à destination de ladite station de base et d'un intervalle de temps de réception en provenance de ladite station de base, ladite communication étant composée de blocs codés (B) correspondant à des groupes d'échantillons de parole, chaque bloc codé étant formé de 2.s sous-blocs (SB) acheminés durant des trames de trafic successives, le pième sous-bloc d'un bloc codé et le (p+s)ième sous-bloc du bloc codé précédent étant combiné dans un paquet, le pième paquet, qui prend place dans un intervalle de temps, lesdites multitrames comprenant un nombre de trames de trafic qui est un multiple du nombre de sous-blocs 2.s, la première trame de trafic d'une desdits multitrames étant utilisée pour transmettre le premier sous-bloc du nième bloc codé, une trame de trafic quelconque de ladite multitrame étant identifiée par l'expression s.j+p ou p varie de 1 à s, et j est un entier positif ou nul, caractérisé en ce que,

- durant chaque trame de trafic (TF) sont effectués :

    + un traitement de configuration (OP1, OP15)
    + le traitement d'un intervalle de temps de réception pour récupérer le pième sous-bloc du (j+n)ième bloc codé et le (p+s)ième sous-bloc du (j+n-1)ième bloc codé à partir du pième paquet de réception (OP6),
    + le traitement d'un intervalle de temps d'émission pour regrouper le pième sous-bloc du (j+n)ième bloc codé et le (p+s)ième sous-bloc du (j+n-1)ième bloc codé et former le pième paquet d'émission (OP13),

- durant une trame de trafic particulière, la trame d'émission, pour chaque valeur de j est effectué de plus le traitement d'un bloc d'émission consistant à former le (j+n+1)ième bloc codé à émettre à partir d'un groupe d'échantillons de parole à émettre (OP11),

- durant une trame de trafic particulière, la trame de réception pour chaque valeur de j est effectué de plus le traitement d'un bloc de réception consistant à récupérer le (j+n-2)ième bloc codé reçu et à restituer le groupe d'échantillons de parole reçu qui lui correspond (OP7),

- lesdits traitements sont réalisés séquentiellement.

2.  Séquencement du traitement du signal dans le mode communication d'un système de radiotéléphone cellulaire numérique selon la revendication 1, caractérisé en ce que, pour une même valeur de j, ladite trame d'émission et ladite trame de réception sont deux trames distinctes, ce qui correspond à deux valeurs de p distinctes.

3.  Séquencement du traitement du signal dans le mode communication d'un système de radiotéléphone cellulaire numérique selon la revendication 1 ou 2, caractérisé en ce que lesdites trames d'émission correspondant aux différentes valeurs de j sont identifiées par la même valeur de p.

4.  Séquencement du traitement du signal dans le mode communication d'un système de radiotéléphone cellulaire numérique selon l'une quelconque des revendications précédentes, caractérisé en ce que lesdites trames de réception correspondant aux différentes valeurs de j sont identifiées par la même valeur de p.

5.  Séquencement du traitement du signal dans le mode communication d'un système de radiotéléphone cellulaire numérique selon l'une quelconque des revendications précédentes, caractérisé en ce que, ledit système étant de plus prévu pour que les différentes stations de base diffusent des signaux sur des canaux de commande, durant l'une au moins desdites trames de trafic (TF) est effectué un traitement supplémentaire (OP3) pour mesurer la puissance du signal reçu sur l'un desdits canaux de commande.

6.  Séquencement du traitement du signal dans le mode communication d'un système de radiotéléphone cellulaire numérique selon l'une quelconque des revendications précédentes, caractérisé en ce que ledit traitement de configuration comprend uniquement deux opérations :

    - une première opération (OP1), effectuée en premier lieu dans l'une desdites trames de trafic (TF) pour préciser les autres traitements à réaliser durant cette trame de trafic,
    - une dernière opération (OP15), effectuée à la suite de ces autres traitements permettant de disposer des résultats qu'ils ont produits, indiquant ainsi la fin des traitements prévus dans ladite trame de trafic (TF).

7.  Séquencement du traitement du signal dans le mode communication d'un système de radiotéléphone cellulaire numérique selon l'une quelconque des revendications précédentes, caractérisé en ce que ledit traitement d'un intervalle de temps d'émission comprend une opération de chiffrement (OP13) du pième paquet d'émission, puis une opération de formation d'un palier à partir de ce paquet et de modulation de ce palier (OP14), ladite communication de parole numérisée étant composée de tels paliers.

8.  Séquencement du traitement du signal dans le mode communication d'un système de radiotéléphone cellulaire numérique selon la revendication précédente, caractérisé en ce que ledit traitement d'un intervalle de temps de réception comprend les opérations suivantes :

    - traitement préalable d'un palier reçu (OP2),
    - démodulation de ce palier pour définir ledit pième paquet de réception, ce paquet faisant ensuite l'objet d'un déchiffrement correspondant audit chiffrement effectué sur ledit paquet d'émission (OP6).

9.  Séquencement du traitement du signal dans le mode communication d'un système de radiotéléphone cellulaire numérique selon l'une quelconque des revendications précédentes, caractérisé en ce que ledit traitement d'un bloc d'émission comprend les opérations suivantes :

- codage de parole dudit groupe d'échantillons de parole à émettre pour former un bloc de parole d'émission (OP11),
- codage de canal de ce bloc de parole d'émission pour définir ledit bloc codé à émettre (OP12).

10. Séquencement du traitement du signal dans le mode communication d'un système de radiotéléphone cellulaire numérique selon la revendication 9, caractérisé en ce que, ledit codage de parole est précédé par un codage préalable de la parole (OP9), effectué en temps réel sur lesdits échantillons de parole à émettre.

11. Séquencement du traitement du signal dans le mode communication d'un système de radiotéléphone cellulaire numérique selon la revendication 9 ou 10, caractérisé en ce que ledit traitement d'un bloc de réception comprend les opérations suivantes :

- décodage de canal dudit bloc codé reçu correspondant audit codage de canal pour restituer un bloc de parole reçu (OP7),
- décodage de parole dudit bloc de parole reçu correspondant audit codage de parole pour restituer ledit groupe d'échantillons de parole reçu (OP8).

12. Séquencement du traitement du signal dans le mode communication d'un système de radiotéléphone cellulaire numérique selon la revendication 11 caractérisé en ce que ledit décodage de parole est suivi d'un décodage complémentaire de la parole (OP10), effectué en temps réel, qui fournit lesdits échantillons de parole reçus.

13. Séquencement du traitement du signal dans le mode communication d'un système de radiotéléphone cellulaire numérique selon l'une quelconque des revendications 7, 8, 9, ou 11, caractérisé en ce que lesdites opérations sont réalisées séquentiellement.

14. Séquencement du traitement du signal dans le mode communication d'un système de radiotéléphone cellulaire numérique selon l'une quelconque des revendications précédentes caractérisé en ce que, lesdites multitrames comprenant de plus chacune au moins une trame de signalisation (SF) utilisée pour la transmission d'informations de signalisation au moyen de blocs de signalisation codés entre ledit terminal et ladite station de base, chaque bloc de signalisation codé étant acheminé par paquets durant t trames de signalisation successives, chaque bloc de signalisation codé étant formé de 2.t sous-blocs regroupés par paire dans lesdits paquets, une trame de signalisation quelconque étant identifiée par l'expression $MT = t.(i-1)+q$ où q varie de 1 à t et i est un entier positif représentant le numéro d'ordre d'un bloc de signalisation codé,

- durant chaque trame de signalisation (SF) sont effectués :

  + une procédure de configuration précisant notamment la valeur de q(OP1, OP15)
  + une procédure de réception pour récupérer les deux sous-blocs du qième paquet du iième bloc de signalisation codé de réception (OP6),
  + une procédure d'émission pour regrouper les deux sous-blocs du quième paquet du ième bloc de signalisation codé d'émission (OP13),

- durant une trame de signalisation particulière, la trame de décodage, pour chaque valeur de i, est effectuée postérieurement à la réception du dernier paquet d'un bloc de signalisation codé de réception une procédure de décodage pour restituer les informations de signalisation de réception correspondantes (OP7),
- durant une trame de signalisation particulière, la trame de codage, pour chaque valeur de i, est effectuée antérieurement à l'émission du premier paquet d'un bloc de signalisation une procédure de codage des informations de signalisation d'émission correspondantes (OP12).

15. Séquencement du traitement du signal dans le mode communication d'un système de radiotéléphone cellulaire numérique selon la revendication 14, caractérisé en ce que, pour une même valeur de i ladite trame de décodage et ladite trame de codage sont deux trames distinctes, ce qui correspond à deux valeurs distinctes de q.

16. Séquencement du traitement du signal dans le mode communication d'un système de radiotéléphone cellulaire numérique selon la revendication 14 ou 15, caractérisé en ce que lesdites trames de décodage correspondant aux différentes valeurs de i sont identifiées par la même valeur de q.

17. Séquencement du traitement du signal dans le mode communication d'un système de radiotéléphone cellulaire numérique selon l'une quelconque des revendications 14 à 16, caractérisé en ce que, lesdites trames de codage correspondant aux différentes valeurs de i sont identifiés par la même valeur de q.

18. Séquencement du traitement du signal dans le mode de communication d'un système de radiotéléphone cellulaire numérique selon la revendication 16 ou 17 caractérisé en ce que ladite procédure de décodage du iième bloc de signalisation codé prend place durant la (t.i)ième trame de signalisation (SF) après ladite procédure de réception.

19. Séquencement du traitement du signal dans le mode de communication d'un système de radiotéléphone cellulaire numérique selon la revendication 17 ou 18 caractérisé en ce que ladite procédure du codage relative au ième bloc de signalisation codé prend place durant la [t(i-1)+1]ième trame de signalisation (SF) avant ladite procédure d'émission.

20. Séquencement du traitement du signal dans le mode de communication d'un système de radiotéléphone cellulaire numérique selon l'une quelconque des revendications 14 à 19 caractérisé en ce que, ledit système étant de plus prévu pour que les différentes stations de base diffusent des signaux sur des canaux de commande, durant l'une au moins desdites trames de signalisation est effectué une procédure supplémentaire (OP3) pour mesurer la puissance du signal reçu sur l'un desdits canaux de commande.

21. Séquencement du traitement du signal dans le mode de communication d'un système de radiotéléphone cellulaire numérique selon l'une quelconque des revendications 14 à 20, caractérisé en ce que lesdites procédures sont réalisées séquentiellement.

22. Séquencement du traitement du signal dans le mode de communication d'un système de radiotéléphone cellulaire numérique selon l'une quelconque des revendications précédentes caractérisé en ce que, lesdites multitrames comprenant de plus une trame de repos (RF), une fenêtre d'observation (R'2) nécessaire à la réception d'un canal de contrôle de fréquence supportant un signal de fréquence prédéterminée et prenant place entre la fin de celui desdits traitements ou desdits procédures effectué durant la trame précédant ladite trame de repos et la fin de cette trame de repos, une plage d'analyse s'étendant ainsi du début de ladite fenêtre d'observation à la fin de ladite trame de repos, durant l'une desdites plages d'analyse au moins est effectué un traitement de contrôle de fréquence comprenant les opérations suivantes :

- une opération d'initialisation (OP1),
- une opération de contrôle de fréquence (OP4) afin d'établir si ladite fréquence prédéterminée a été détectée durant ladite fenêtre d'observation (R'2),
- une opération terminale OP(15) indiquant la fin dudit traitement de contrôle de fréquence et le résultat de la détection précédente comprenant, s'il est positif, un message de détection.

23. Séquencement du traitement du signal dans le mode de communication d'un système de radiotéléphone cellulaire numérique selon la revendication 22 caractérisé en ce que la détection de ladite fréquence prédéterminée étant réalisée, un canal de synchronisation associé audit canal de contrôle de fréquence supportant un paquet de synchronisation situé dans une desdites fenêtres d'observation à l'endroit indiqué dans ledit message de détection, ledit paquet de synchronisation comprenant un message de synchronisation ayant fait l'objet d'un codage, durant la plage d'analyse correspondant à ladite fenêtre d'observation est effectué un traitement de synchronisation comprenant les opértions suivantes :

- opération préliminaire (OP1) précisant notamment la position temporelle dudit paquet de synchronisation,
- opération de synchronistion (OP5) pour récupérer ledit message de synchronisation à partir dudit paquet de synchronisation,
- opération finale (OP15) indiquant la fin dudit traitement de synchronisation et fournissant ledit message de synchronisation.

24. Séquencement du traitement du signal dans le mode de communication d'un système de radiotéléphone cellulaire numérique selon la revendication 22 caractérisé en ce que ledit traitement de contrôle de fréquence associé à une trame de repos (RF) étant regroupé avec lesdits traitements ou lesdites procédures réalisées au cours de la trame précédant ladite trame de repos, l'ensemble de ces traitements et/ou procédures s'étale sur les deux trames concernées, ladite opération d'initialisation et ladite opération terminale étant alors incorporées dans ledit traitement de configuration ou dans ladite procédure de configuration.

25. Séquencement du traitement du signal dans le mode de communication d'un système de radiotéléphone cellulaire numérique selon la revendication 23 ou 24 caractérisé en ce que,ledit traitement de synchronisation associé à une trame de repos (RF) étant regroupé avec lesdits traitements ou lesdites procédures réalisées au cours de la trame précédent ladite trame de repos, l'ensemble de ces traitements et/ou procédures s'étale sur les deux trames concernées, ladite opération préliminaire et ladite opération finale étant alors incorporées dans ledit traitement de configuration ou dans ladite procédure de configuration.

**Patentansprüche**

1. Sequenzsteuerung der Signalverarbeitung im Kommunikationsmodus eines digitalen zellularen Funkkommunikationssystems zum Befördern einer digitalisierten Sprachkommunikation zwischen einem Endgerät und einer Basisstation mittels eines Kommunikationskanals, wobei das System Multirahmen verwendet, die Rahmen (F) umfassen, die jeweils aus Zeitintervallen aufgebaut sind, wobei die Kommunikation auf wenigstens bestimmten dieser Rahmen, als Verkehrsrahmen (TF) bezeichnet, stattfindet, wobei das Endgerät über ein Sende-Zeitintervall zum Senden zur Basisstation und ein Empfangs-Zeitintervall zum Empfangen von der Basisstation verfügt, wobei die Kommunikation aus codierten Blöcken (B) aufgebaut ist, die Gruppen von Sprachabtastwerten entsprechen, wobei jeder codierte Block aus 2.s Unterblöcken (SB) gebildet ist, die während aufeinanderfolgender Verkehrsrahmen befördert werden, wobei der p-te Unterblock eines codierten Blocks und der (p+s)-te Unterblock des vorhergehenden codierten Blocks in einem Paket, dem p-ten Paket, kombiniert sind, das in einem Zeitintervall angesiedelt ist, wobei die Multirahmen eine Zahl von Verkehrsrahmen umfassen, die ein Vielfaches der Zahl von Unterblöcken 2.s ist, wobei der erste Verkehrsrahmen eines der Multirahmen verwendet wird, um den ersten Untenblock des n-ten codierten Blocks zu übertragen, wobei ein beliebiger Verkehrsrahmen des Multirahmens durch den Ausdruck s.j+p identifiziert ist, wobei p von 1 bis s variiert und j eine positive ganze Zahl oder Null ist, dadurch gekennzeichnet, daß

- während jedes Verkehrsrahmens (TF) ausgeführt werden:

  + eine Konfigurationsverarbeitung (OP1, OP15)
  + die Verarbeitung eines Empfangs-Zeitintervalls zum Wiedergewinnen des p-ten Unterblocks des (j+n)-ten codierten Blocks und des (p+s)-ten Unterblocks des (j+n-1)-ten codierten Blocks aus dem p-ten Empfangspaket (OP6),
  + die Verarbeitung eines Sende-Zeitintervalls zum Zusammenfassen des p-ten Unterblocks des (j+n)-ten codierten Blocks und des (p+s)-ten Unterblocks des (j+n-1)-ten codierten Blocks und zum Bilden des p-ten Sendepakets (OP13),

- während eines bestimmten Verkehrsrahmens, des Senderahmens, für jeden Wert von j außerdem die Verarbeitung eines Sendeblocks ausgeführt wird, die darin besteht, den (j+n+1)-ten codierten zu sendenden Block aus einer Gruppe von zu sendenden Sprachabtastwerten zu bilden (OP11),

- während eines bestimmten Verkehrsrahmens, des Empfangsrahmens, für jeden Wert von j außerdem die Verarbeitung eines Empfangsblocks ausgeführt wird, die darin besteht, den (j+n-2)-ten empfangenen codierten Block wiederzugewinnen und die ihm entsprechende empfangene Gruppe von Sprachabtastwerten wiederherzustellen (OP7),

- die Verarbeitungen sequentiell durchgeführt werden.

2. Sequenzsteuerung der Signalverarbeitung im Kommunikationsmodus eines digitalen zellularen Funkkommunikationssystems nach Anspruch 1, dadurch gekennzeichnet, daß für einen gleichen Wert von j der Senderahmen und der Empfangsrahmen zwei verschiedene Rahmen sind, was zwei verschiedenen Werten von p entspricht.

3. Sequenzsteuerung der Signalverarbeitung im Kommunikationsmodus eines digitalen zellularen Funkkommunikationssystems nach Anspruch 1 oder 2, dadurch gekennzeichnet, daß die Senderahmen, die den verschiedenen Werten von j entsprechen, durch den gleichen Wert von p identifiziert werden.

4. Sequenzsteuerung der Signalverarbeitung im Kommunikationsmodus eines digitalen zellularen Funkkommunikationssystems nach einem beliebigen der vorhergehenden Ansprüche, dadurch gekennzeichnet, daß die Empfangsrahmen, die den verschiedenen Werten von j entsprechen, durch den gleichen Wert von p identifiziert werden.

5. Sequenzsteuerung der Signalverarbeitung im Kommunikationsmodus eines digitalen zellularen Funkkommunikationssystems nach einem beliebigen der vorhergehenden Ansprüche, dadurch gekennzeichnet, daß bei dem System, das ferner vorgesehen ist, damit die verschiedenen Basisstationen Signale auf Steuerkanälen ausstrahlen, während wenigstens eines der Verkehrsrahmen (TF) eine zusätzliche Verarbeitung (OP3) zum Messen der Leistung des empfangenen Signals auf einem der Steuerkanäle ausgeführt wird.

6. Sequenzsteuerung der Signalverarbeitung im Kommunikationsmodus eines digitalen zellularen Funkkommunikationssystems nach einem beliebigen der vorhergehenden Ansprüche, dadurch gekennzeichnet, daß die Konfigurationsverarbeitung nur zwei Operationen umfaßt:

- eine erste Operation (OP1), die an erster Stelle in einem der Verkehrsrahmen (TF) ausgeführt wird, um die anderen während dieses Rahmens durchzuführenden Verarbeitungen zu präzisieren,

- eine letzte Operation (OP15), die anschließend an diese anderen Verarbeitungen ausgeführt wird und es gestattet, über die Ergebnisse zu verfügen, die sie geliefert haben und die so das Ende der in diesem Verkehrsrahmen (TF) vorgesehenen Verarbeitungen angibt.

7. Sequenzsteuerung der Signalverarbeitung im Kommunikationsmodus eines digitalen zellularen Funkkommunikationssystems nach einem beliebigen der vorhergehenden Ansprüche, dadurch gekennzeichnet, daß die Verarbeitung eines Sende-Zeitintervalls eine Verschlüsselungsoperation (OP13) des p-ten Sendepakets, dann eine Operation des Bildens eines Bursts aus diesem Paket und der Modulation dieses Bursts (OP14) umfaßt, wobei die digitalisierte Sprachkommunikation aus solchen Bursts aufgebaut ist.

8. Sequenzsteuerung der Signalverarbeitung im Kommunikationsmodus eines digitalen zellularen Funkkommunikationssystems nach dem vorhergehenden Anspruch, dadurch gekennzeichnet, daß die Verarbeitung eines Empfangs-Zeitintervalls die folgenden Operationen umfaßt:

- Vorverarbeitung eines empfangenen Bursts (OP2),

- Demodulation dieses Bursts, um das p-te Empfangspaket zu definieren, wobei dieses Paket anschließend Gegenstand einer Entschlüsselung ist, die der am Sendepaket ausgeführten Verschlüsselung entspricht (OP6).

9. Sequenzsteuerung der Signalverarbeitung im Kommunikationsmodus eines digitalen zellularen Funkkommunikationssystems nach einem beliebigen der vorhergehenden Ansprüche, dadurch gekennzeichnet, daß die Verarbeitung eines Sendeblocks die folgenden Operationen umfaßt:

- Sprachcodierung der zu sendenden Gruppe von Sprachabtastwerten, um einen Sende-Sprachblock zu bilden (OP11),

- Kanalcodierung dieses Sende-Sprachblocks, um den zu sendenden codierten Block zu definieren (OP12).

10. Sequenzsteuerung der Signalverarbeitung im Kommunikationsmodus eines digitalen zellularen Funkkommunikationssystems nach Anspruch 9, dadurch gekennzeichnet, daß der Sprachcodierung eine Vorcodierung der Sprache (OP9) vorausgeht, die in Echtzeit an den zu sendenden Sprach-Abtastwerten ausgeführt wird.

11. Sequenzsteuerung der Signalverarbeitung im Kommunikationsmodus eines digitalen zellularen Funkkommunikationssystems nach einem der Ansprüche 9 oder 10, dadurch gekennzeichnet, daß die Verarbeitung eines Empfangsblocks die folgenden Operationen umfaßt:

- Kanaldecodierung des empfangenen codierten Blocks, entsprechend der Kanalcodierung, um einen empfangenen Sprachblock wiederherzustellen (OP7),

- Sprachdecodierung des empfangenen Sprachblocks, entsprechend der Sprachcodierung, um die empfangene Gruppe von Sprachabtastwerten wiederherzustellen (OP8).

12. Sequenzsteuerung der Signalverarbeitung im Kommunikationsmodus eines digitalen zellularen Funkkommunikationssystems nach Anspruch 11, dadurch gekennzeichnet, daß auf die Sprachdecodierung eine ergänzende Codierung der Sprache (OP10) folgt, die in Echtzeit ausgeführt wird, die die empfangenen Sprach-Abtastwerte liefert.

13. Sequenzsteuerung der Signalverarbeitung im Kommunikationsmodus eines digitalen zellularen Funkkommunikationssystems nach einem beliebigen der Ansprüche 7, 8, 9 oder 11, dadurch gekennzeichnet, daß die Operationen sequentiell durchgeführt werden.

14. Sequenzsteuerung der Signalverarbeitung im Kommunikationsmodus eines digitalen zellularen Funkkommunikationssystems nach einem beliebigen der vorhergehenden Ansprüche, dadurch gekennzeichnet, daß wenn die Multirahmen ferner wenigstens einen zur Übertragung vcn Signalisierungsinformationen mit Hilfe von codierten Signalisierungsblöcken zwischen dem Endgerät und der Basisstation verwendeten Signalisierungsrahmen (SF) umfassen, wobei jeder codierte Signalisierungsblock mittels Paketen während t aufeinanderfolgender Signalisierungsrahmen übertragen wird, wobei jeder codierte Signalisierungsblock aus 2.t paarweise in den Paketen zusammengefaßten Unterblöcken gebildet ist, wobei ein beliebiger Signalisierungsrahmen durch den Ausdruck $MT = t.(i-1)+q$ identifiziert ist, wobei q von 1 bis t variiert und i eine positive ganze Zahl ist, die die Ordnungszahl eines codierten Signalisierungsblocks darstellt,

- während jedes Signalisierungsrahmens (SF) ausgeführt werden:

    + eine Konfigurationsprozedur, die insbesondere den Wert von q präzisiert (OP1, OP15)
    + eine Empfangsprozedur zum Wiedergewinnen der zwei Unterblöcke des q-ten Paketes des i-ten codierten Empfangs-Signalisierungsblocks (OP6),
    + eine Sendeprozedur zum Zusammenfassen der zwei Unterblöcke des q-ten Paketes des i-ten codierten Sende-Signalisierungsblocks (OP13),

- während eines bestimmten Signalisierungsrahmens, des Decodierrahmens, für jeden Wert von i nach Empfang des letzten Paketes eines codierten Empfangs-Signalisierungsblocks eine Decodierprozedur durchgeführt wird, um die entsprechenden Empfangs-Signalisierungsinformationen wiederherzustellen (OP7),

- während eines bestimmten Signalisierungsrahmens, des Codierrahmens, für jeden Wert von i vor dem Senden des ersten Paketes eines Signalisierungsblocks eine Codierprozedur der entsprechenden Sende-Signalisierungsinformationen ausgeführt wird (OP12).

15. Sequenzsteuerung den Signalverarbeitung im Kommunikationsmodus eines digitalen zellularen Funkkommunikationssystems nach Anspruch 14, dadurch gekennzeichnet, daß für einen gleichen Wert von i der Decodierrahmen und der Codierrahmen zwei unterschiedliche Rahmen sind, was zwei unterschiedlichen Werten von q entspricht.

16. Sequenzsteuerung der Signalverarbeitung im Kommunikationsmodus eines digitalen zellularen Funkkommunikationssystems nach Anspruch 14 oder 15, dadurch gekennzeichnet, daß die Decodierrahmen, die den verschiedenen Werten von i entsprechen, durch den gleichen Wert von q identifiziert werden.

17. Sequenzsteuerung der Signalverarbeitung im Kommunikationsmodus eines digitalen zellularen Funkkommunikationssystems nach einer der Ansprüche 14 bis 16, dadurch gekennzeichnet, daß die Codierrahmen, die den verschiedenen Werten von i entsprechen, durch den gleichen Wert von q identifiziert werden.

18. Sequenzsteuerung der Signalverarbeitung im Kommunikationsmodus eines digitalen zellularen Funkkommunikationssystems nach Anspruch 16 oder 17, dadurch gekennzeichnet, daß die Decodierprozedur des i-ten codierten Signalisierungsblocks während des (t.i)-ten Signalisierungsrahmens (SF) nach der Empfangsprozedur stattfindet.

19. Sequenzsteuerung der Signalverarbeitung im Kommunikationsmodus eines digitalen zellularen Funkkommunikationssystems nach Anspruch 17 oder 18, dadurch gekennzeichnet, daß die auf den iten codierten Signalisierungsblock bezogene Codierprozedur während des [t(i-1)+1]-ten Signalisierungsrahmens (SF) vor der Sendeprozedur stattfindet.

20. Sequenzsteuerung der Signalverarbeitung im Kommunikationsmodus eines digitalen zellularen Funkkommunikationssystems nach einem beliebigen der Ansprüche 14 bis 19, dadurch gekennzeichnet, daß das System ferner dafür vorgesehen ist, daß die verschiedenen Basisstationen Signale auf Steuerkanälen ausstrahlen, daß während wenigstens eines der Signalisierungsrahmen eine zusätzliche Prozedur (OP3) ausgeführt wird, um die Leistung des auf einem dieser Steuerkanäle empfangenen Signals zu messen.

21. Sequenzsteuerung der Signalverarbeitung im Kommunikationsmodus eines digitalen zellularen Funkkommunikationssystems nach einem beliebigen der Ansprüche 14 bis 20, dadurch gekennzeichnet, daß die Prozeduren sequentiell ausgeführt werden.

22. Sequenzsteuerung der Signalverarbeitung im Kommunikationsmodus eines digitalen zellularen Funkkommunikationssystems nach einem beliebigen der vorhergehenden Ansprüche, dadurch gekennzeichnet, daß die Multirahmen ferner einen Ruherahmen (RF) und ein Beobachtungsfenster (R'2) umfassen, das zum Empfangen eines Frequenzsteuerkanals notwendig ist, der ein Signal vorgegebener Frequenz trägt und angesiedelt ist zwischen dem Ende derjenigen der Verarbeitungen oder der Prozeduren, die während des dem Ruherahmen vorangehenden Rahmens ausgeführt wurden und dem Ende dieses Ruherahmens, wobei sich ein Analysebereich so vom Beginn des Beobachtungsfensters bis zum Ende des Ruherahmens erstreckt, während wenigstens eines dieser Analysebereiche wenigstens eine Frequenzsteuerungsverarbeitung ausgeführt wird, die die folgenden Operationen umfaßt:

- eine Initialisierungsoperation (OP1),

- eine Frequenzsteueroperation (OP4), um festzustellen, ob die vorgegebene Frequenz während des Beobachtungsfensters (R'2) erfaßt wurde,

- eine Abschlußoperation (OP15), die das Ende der Frequenzsteuerverarbeitung und das Ergebnis der vorhergehenden Erfassung angibt, das, wenn es positiv ist, eine Erfassungsmeldung umfaßt.

23. Sequenzsteuerung der Signalverarbeitung im Kommunikationsmodus eines digitalen zellularen Funkkommunikationssystems nach Anspruch 22, dadurch gekennzeichnet, daß bei durchgeführter Erfassung der vorgegebenen Frequenz, wcbei ein dem Frequenzsteuerkanal zugeordneter Synchronisationskanal ein Synchronisationspaket unterstützt, das in eine der Beobachtungsfenster am in der Erfassungsmeldung angegebenen Ort angeordnet ist, wobei das Synchronisationspaket eine Synchronisationsmeldung umfaßt, die Gegenstand einer Codierung gewesen ist, während des diesem Beobachtungsfenster entsprechenden Analysebereichs eine Sychronisationsverarbeitung ausgeführt wird, die die folgenden Operationen umfaßt:

- Voraboperation (OP1), die insbesondere die zeitliche Position des Synchronisationspaketes präzisiert,

- Synchronisationsoperation (OP5) zum Wiedergewinnen der Synchronisationsmeldung aus dem Synchronisationspaket,

- Abschlußoperation (OP15), die das Ende der Synchronisationsverarbeitung angibt und die Synchronisationsmeldung liefert.

24. Sequenzsteuerung der Signalverarbeitung im Kommunikationsmodus eines digitalen zellularen Funkkommunikationssystems nach Anspruch 22, dadurch gekennzeichnet, daß die einem Ruherahmen (RF) zugeordnete Frequenzsteuerverarbeitung mit den Verarbeitungen oder Prozeduren zusammengefaßt ist, die im Laufe des dem Ruherahmen vorangehenden Rahmens durchgeführt werden, wobei die Gesamtheit dieser Verarbeitungen und/oder Prozeduren sich über die zwei betreffenden Rahmen erstreckt, wobei die Initialisierungsoperation und die Abschlußoperation dann in der Konfigurationsverarbeitung oder der Konfigurationsprozedur enthalten sind.

25. Sequenzsteuerung der Signalverarbeitung im Kommunikationsmodus eines digitalen zellularen Funkkommunikationssystems nach Anspruch 23 oder 24, dadurch gekennzeichnet, daß wenn die einem Ruherahmen (RF) zugeordnete Synchronisationsverarbeitung mit den Verarbeitungen oder den Prozeduren zusammengefaßt ist, die im Laufe des dem Ruherahmen vorangehenden Rahmens ausgeführt werden, die Gesamtheit dieser Verarbeitungen und/oder Prozeduren sich über die zwei betreffenden Rahmen erstreckt, wobei die Voraboperation und die Abschlußoperation dann in der Konfigurationsverarbeitung oder der Konfigurationsprozedur enthalten sind.

**Claims**

1. Sequencing of signal processing in the communication mode of a digital cellular radio system for conveying digitised speech communications between a terminal and a base station by means of a communication channel, said system using multiframes comprising frames (F) comprising time slots, said communication taking place in some at least of said frames referred to as traffic frames (TF), said terminal having a time slot for sending to said base station and a time slot for receiving from said base station, said communication comprising coded blocks (B) representing groups of speech samples, each coded block being formed of 2.s subblocks (SB) each conveyed during successive traffic frames, the pth sub-block of a coded block and the (p+s)th sub-block of the preceding coded block being combined in a pth packet which takes place in a time slot, said multiframes comprising a number of traffic frames which is a multiple of the number of sub-blocks 2.s, the first traffic frame of one of said multiframes being used to send the first sub-block of the nth coded block, any traffic frame of said multiframe being identified by the expression s.j+p where $\underline{p}$ varies from 1 through $\underline{s}$ and $\underline{j}$ is a positive or null integer, characterised in that:

- during each traffic frame (TF) the following operations are effected:

  + a configuration process (OP1, OP15),
  + the processing of a receive time slot to recover the pth sub-block of the (j+n)th coded block and the (p+s)th sub-block of the (j+n-1)th coded block from the pth receive packet (OP6),
  + the processing of a send time slot to group the pth sub-block of the (j+n)th coded block and the (p+s)th sub-block of the (j+n-1)th coded block and form the pth send packet (OP13),

- during a specific send traffic frame for each value of j processing a send block by forming the (j+n+1)th coded block to be sent from a group of speech samples to end (OP11),
- during a specific receive traffic frame for each value of j processing a receive block to recover the (j+n-2)th coded block received and recover the group of speech samples received corresponding to it (OP7),

- said processes are carried out sequentially.

2. Sequencing of signal processing in the communication mode of a digital cellular mobile radio system according to claim 1 characterised in that, for the same value of j, said send frame and said receive frame are separate and are identified by different values of p.

3. Sequencing of signal processing in the communication mode of a digital cellular mobile radio system according to claim 1 or claim 2 characterised in that said send frames related to different values of j are identified by the same value of p.

4. Sequencing of signal processing in the communication mode of a digital cellular mobile radio system according to any one of the preceding claims characterised in that said receive frames related to different values of j are identified by the same value of p.

5. Sequencing of signal processing in the communication mode of a digital cellular mobile radio system according to any one of the preceding claims characterised in that said system is adapted so that said base stations broadcast signals on control channels and during at least one of said traffic frames (TF) supplementary processing (OP3) is carried out to measure the power of the signal received on one of said control channels.

6. Sequencing of signal processing in the communication mode of a digital cellular mobile radio system according to any one of the preceding claims characterised in that said configuration process comprises only two operations:

- a first operation carried out first in a traffic frame to specify the other processes to be carried out during said traffic frame, and
- a last operation carried out after said other processes having access to the results produced thereby and so indicating the end of the processing provided for in said traffic frame.

7. Sequencing of signal processing in the communication mode of a digital cellular mobile radio system according to any one of the preceding claims characterised in that said processing of a send time slot comprises an encipherment operation (OP13) on the pth send packet and then an operation (OP14) to form a burst from said packet and to modulate said burst, said digitised speech communications being made up of such bursts.

8. Sequencing of signal processing in the communication mode of a digital cellular mobile radio system according to the preceding claim characterised in that said processing of a receive time slot comprises the following operations:

- preliminary processing of a receive burst (OP2), and
- demodulation of said burst to define said pth receive packet which is then deciphered by a process which is the converse of the encipherment process applied to said send packet (OP6).

9. Sequencing of signal processing in the communication mode of a digital cellular mobile radio system according to any one of the preceding claims characterised in that said processing of a send block comprises the following operations:

- speech coding of said group of speech samples to send to form a send speech block, and
- channel coding of said send speech block to define said coded block to send.

10. Sequencing of signal processing in the communication mode of a digital cellular mobile radio system according to claim 9 characterised in that said speech coding is preceded by real time preliminary coding (OP9) of the speech samples to be sent.

11. Sequencing of signal processing in the communication mode of a digital cellular mobile radio system according to claim 9 or claim 10 characterised in that said processing of a receive block comprises the following operations:

- channel decoding of said received coded block by a process which is the converse of said channel coding to recover a received speech block (OP7), and
- speech decoding of said received speech block by a process which is the converse of said speech coding to recover said received group of speech samples (OP8).

12. Sequencing of signal processing in the communication mode of a digital cellular mobile radio system according to claim 11 characterised in that said speech decoding is followed by real time complementary speech decoding (OP10) to obtain said received speech samples.

13. Sequencing of signal processing in the communication mode of a digital cellular mobile radio system according to any one of claims 7, 8, 9 or 11 characterised in that said processes are carried out sequentially.

14. Sequencing of signal processing in the communication mode of a digital cellular mobile radio system according to any one of the preceding claims characterised in that said multiframes each further comprise at least one signalling frame (SF) used to send signalling information by means of coded signalling blocks between said terminal and said base station, each coded signalling block is conveyed by packet during $t$ successive signalling frames, each coded signalling block is formed of 2.t sub-blocks grouped in pairs in said packets, any signalling frame is identified by the expression $MT = t.(i-1)+q$ where $q$ varies from 1 through $t$ and $i$ is a positive integer representing the number of a coded signalling block, and:

- during each signalling frame (SF) the following operations are effected:

  + a configuration procedure which among other things gives the value of $q$ (OP1, OP15),
  + a receive procedure for recovering the two sub-blocks of the qth packet of the ith received coded signalling block (OP6),
  + a send procedure to group the two sub-blocks of the qth packet of the ith send coded signalling block (OP13),

- during a particular decoding signalling frame, for each value of $i$, there is effected after reception of the last packet of a receive coded signalling block a decoding procedure to recover the respective receive signalling information (OP7),
- during a particular coding signalling frame, for each value of $i$, there is effected before sending of the first packet of a signalling block a procedure for coding the respective send signalling information (OP12).

15. Sequencing of signal processing in the communication mode of a digital cellular mobile radio system according to claim 14 characterised in that, for the same value of $i$, said decoding frame and said coding frame are two separate frames for which there are two separate values of $q$.

16. Sequencing of signal processing in the communication mode of a digital cellular mobile radio system according to claim 14 or claim 15 characterised in that said decoding frames for different values of $i$ are identified by the same value of $q$.

17. Sequencing of signal processing in the communication mode of a digital cellular mobile radio system according to any one of claims 14 to 16 characterised in that said coding frames for different values of $i$ are identified by the same value of $q$.

18. Sequencing of signal processing in the communication mode of a digital cellular mobile radio system according to claim 16 or claim 17 characterised in that said procedure for decoding the ith coded signalling block takes place during the (t.i)th signalling frame (SF) after said receive procedure.

19. Sequencing of signal processing in the communication mode of a digital cellular mobile radio system according to claim 17 or claim 18 characterised in that said coding procedure relating to the ith coded signalling block takes place during the $[t(i-1)+1]$th signalling frame (SF) before said send procedure.

20. Sequencing of signal processing in the communication mode of a digital cellular mobile radio system according to any one of claims 14 to 19 characterised in that said system is adapted so that said base stations broadcast signals on control channels and during at least one of said signalling frames there is effected an additional procedure (OP3) for measuring the power of the signal received on one of said control channels.

21. Sequencing of signal processing in the communication mode of a digital cellular mobile radio system according to any one of claims 14 to 20 characterised in that said procedures are carried out sequentially.

22. Sequencing of signal processing in the communication mode of a digital cellular mobile radio system according to any one of the preceding claims characterised in that said multiframes additionally comprise an idle frame (RF), an observation window (R'2) required for receiving a frequency control channel supports a signal of predetermined frequency and takes place between the end of said processes or said procedures effected during the frame preceding said idle frame and the end of said idle frame, an analysis stage therefore extends from the start of said observation window to the end of said idle frame and during one of said analysis stages at least there is effected a frequency control process comprising the following operations:

- an initialisation operation (OP1),
- a frequency control operation (OP4) to establish if said predetermined frequency has been detected during said observation window (R'2), and
- a terminal operation (OP15) indicating the end of said frequency control process and the result of the preceding detection comprising, if positive, a detection message.

23. Sequencing of signal processing in the communication mode of a digital cellular mobile radio system according to claim 22 characterised in that when said predetermined frequency has been detected, a synchronisation channel associated with said frequency control channel supports a synchronisation packet situated in one of said observation windows at the location indicated in said detection message, said synchronisation packet comprises a synchronisation message that has been coded, and during the analysis stage corresponding to said observation window there is effected a synchronisation process comprising the following operations:

- preliminary operation (OP1) specifying in particular the temporal position of said synchronisation packet,
- synchronisation operation (OP5) to recover said synchronisation message from said synchronisation packet, and
- final operation (OP15) indicating the end of said synchronisation process and supplying said synchronisation message.

24. Sequencing of signal processing in the communication mode of a digital cellular mobile radio system according to claim 22 characterised in that said frequency control process associated with an idle frame (RF) is grouped with said processes or said procedures carried out during the frame preceding said idle frame, the set of said processes and/or procedures spreads across the two frames concerned and said initialisation operation and said terminal operation are incorporated into said configuration process or into said configuration procedure.

25. Sequencing of signal processing in the communication mode of a digital cellular mobile radio system according to claim 23 or claim 24 characterised in that said synchronisation process associated with an idle frame (RF) is grouped with said processes or said procedures carried out during the frame preceding said idle frame, the set of said processes and/or procedures spreads across the two frames concerned and said preliminary operation and said final operation are incorporated into said configuration process or into said configuration procedure.

**FIG.1**

R1    E    R2

0   T   2T   3T   4T   5T   6T   7T   8T

**FIG.2**

R'1    E'    R'2

0   T   2T   3T   4T   5T   6T   7T   8T   9T   10T   11T   12T   13T   14T   15T   16T

**FIG.3**

| B/F | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 |
|---|---|---|---|---|---|---|---|---|---|---|---|---|---|---|---|---|---|---|---|---|---|---|---|---|---|---|
| n-1 | 5 | 6 | 7 | 8 |  |  |  |  |  |  |  |  |  |  |  |  |  |  |  |  |  |  |  |  |  |  |
| n | 1 | 2 | 3 | 4 | 5 | 6 | 7 | 8 |  |  |  |  |  |  |  |  |  |  |  |  |  |  |  |  |  |  |
| n+1 |  |  |  |  | 1 | 2 | 3 | 4 | 5 | 6 | 7 | 8 |  |  |  |  |  |  |  |  |  |  |  |  |  |  |
| n+2 |  |  |  |  |  |  |  |  | 1 | 2 | 3 | 4 | 5 | 6 | 7 | 8 |  |  |  |  |  |  |  |  |  |  |
| n+3 |  |  |  |  |  |  |  |  |  |  |  |  | 1 | 2 | 3 | 4 | 5 | 6 | 7 | 8 |  |  |  |  |  |  |
| n+4 |  |  |  |  |  |  |  |  |  |  |  |  |  |  |  |  | 1 | 2 | 3 | 4 | 5 | 6 | 7 | 8 |  |  |
| n+5 |  |  |  |  |  |  |  |  |  |  |  |  |  |  |  |  |  |  |  |  | 1 | 2 | 3 | 4 | 5 | 6 |

SB

# FIG.4

| F | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 |
|---|---|---|---|---|---|---|---|---|---|----|----|----|----|----|----|----|----|----|----|----|----|----|----|----|----|----|
| TF | 1 | 2 | 3 | 4 | 5 | 6 | 7 | 8 | 9 | 10 | 11 | 12 | | 13 | 14 | 15 | 16 | 17 | 18 | 19 | 20 | 21 | 22 | 23 | 24 | |
| SF | | | | | | | | | | | | | O | | | | | | | | | | | | | |
| RF | | | | | | | | | | | | | | | | | | | | | | | | | | O |
| PM | 3 | 1 | 1 | 2 | 3 | 1 | 1 | 2 | 3 | 1 | 1 | 2 | 4 | 3 | 1 | 1 | 2 | 3 | 1 | 1 | 2 | 3 | 1 | 1 | 2 | 5/6 |
| OP1 | O | O | O | O | O | O | O | O | O | O | O | O | O | O | O | O | O | O | O | O | O | O | O | O | O | O |
| OP2 | O | O | O | O | O | O | O | O | O | O | O | O | O | O | O | O | O | O | O | O | O | O | O | O | O | O |
| OP3 | O | O | O | O | O | O | O | O | O | O | O | O | O | O | O | O | O | O | O | O | O | O | O | O | | |
| OP4 | | | | | | | | | | | | | | | | | | | | | | | | | | O |
| OP5 | | | | | | | | | | | | | | | | | | | | | | | | | | O |
| OP6 | O | O | O | O | O | O | O | O | O | O | O | O | O | O | O | O | O | O | O | O | O | O | O | O | O | |
| OP7 | O | | | O | | | | | O | | | | O | O | | | | O | | | | O | | | | |
| OP8 | O | | | O | | | | | O | | | | | O | | | | O | | | | O | | | | |
| OP9 | O | O | O | O | O | O | O | O | O | O | O | O | O | O | O | O | O | O | O | O | O | O | O | O | O | O |
| OP10 | O | O | O | O | O | O | O | O | O | O | O | O | O | O | O | O | O | O | O | O | O | O | O | O | O | O |
| OP11 | | | | O | | | | | O | | | | | O | | | | O | | | | O | | | O | |
| OP12 | | | | O | | | | | O | | | | O | O | | | | O | | | | O | | | O | |
| OP13 | O | O | O | O | O | O | O | O | O | O | O | O | O | O | O | O | O | O | O | O | O | O | O | O | O | |
| OP14 | O | O | O | O | O | O | O | O | O | O | O | O | O | O | O | O | O | O | O | O | O | O | O | O | O | |
| OP15 | O | O | O | O | O | O | O | O | O | O | O | O | O | O | O | O | O | O | O | O | O | O | O | O | O | O |

EP 0 527 341 B1